# EUROPÄISCHE PATENTSCHRIFT

(11) **EP 1 591 779 B1**
(45) Veröffentlichungstag und Bekanntmachung des Hinweises auf die Patenterteilung: **20.01.2010**
(21) Anmeldenummer: 05008923.4
(22) Anmeldetag: 22.04.2005
(51) Int. Cl.: G01N 27/30

(54) **Elektrochemischer Gas-Sensor mit hydrophiler Membranbeschichtung**
Electrochemical gas sensor with hydrophilic membrane coating
Capteur de gaz électrochimique avec un revêtement de membrane hydrophile

(30) Priorität: 26.04.2004 EP 04009818
(43) Veröffentlichungstag der Anmeldung: 02.11.2005
(73) Patentinhaber: Roche Diagnostics GmbH, 68305 Mannheim (DE); F. Hoffmann-La Roche AG, 4070 Basel (CH)
(72) Erfinder: Weis, Léonie, Dr., 8045 Graz (AT); Werkl, Dietmar, 8010 Graz (AT); Leiner, Marco, Dr., 8045 Graz (AT)

(56) Entgegenhaltungen:
- US-A- 4 269 685
- US-A- 4 534 355
- US-A- 4 885 077
- US-A- 6 001 067
- US-B1- 6 586 038

## Beschreibung

### Gebiet der Erfindung:

Die Erfindung betrifft elektrochemische Gas-Sensoren, welche eine gasdurchlässige und weitgehend ionen- und flüssigkeitsundurchlässige Membran zur Trennung von wässriger Außenlösung und Innenelektrolytlösung besitzen.
Die Erfindung betrifft insbesondere die Verbesserung der Benetzungseigenschaften dieser Membran für wässrige Außenlösungen durch Aufbringen eines Films eines hydrophilen Polymers zumindest auf der der wässrigen Außenlösung zugewandten Seite der Membran.

### Stand der Technik:

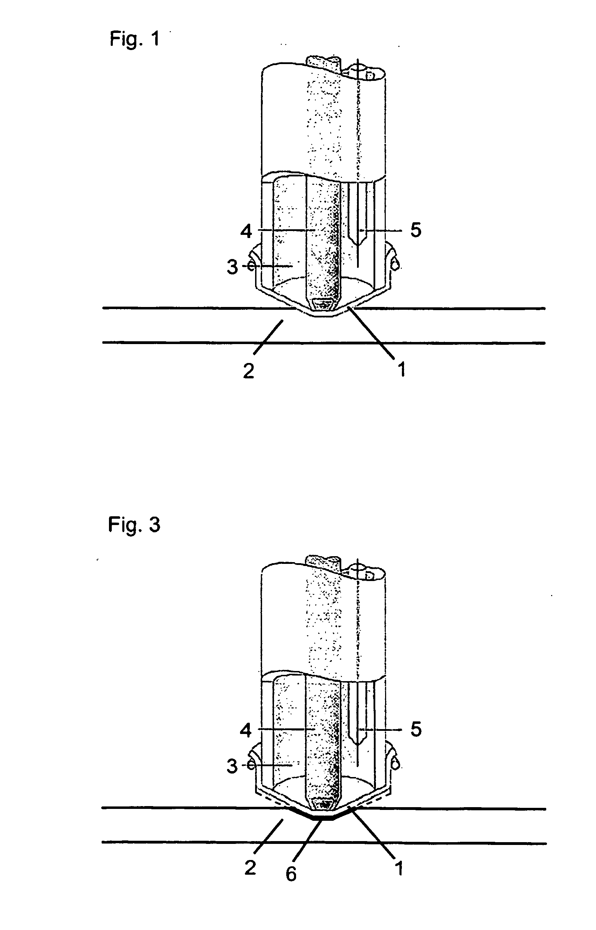

Bei elektrochemischen Gas-Sensoren, auch gasselektive oder gassensitive Elektroden genannt, diffundieren die zu bestimmenden Gasmoleküle durch eine gasdurchlässige und weitgehend flüssigkeits- und ionenundurchlässige Membran aus einer zumeist wässrigen Außenlösung oder auch einer Gasphase in der Innenelektrolytraum des Sensors. Dieser Innenelektrolytraum enthält neben einer Innenelektrolytlösung auch Elektroden zur elektrochemischen Bestimmung des Gases, insbesondere Mess- oder Arbeitselektroden, Gegenelektroden oder Referenzelektroden. In diesem Innenelektrolytraum laufen die eigentlichen elektrochemischen Nachweisreaktionen zur Bestimmung des Gases ab, meist mittels amperometrischer oder potentiometrischer Methoden.
Ein häufig eingesetzter Gas-Sensor ist beispielsweise der Sauerstoffsensor nach Clark. Hier trennt eine gaspermeable Membran die Innenelektrolytlösung vom wässrigen Außenmedium, dem Messmedium. In die Innenelektrolytlösung tauchen im einfachsten Fall zwei Elektroden ein, von denen eine als Arbeitselektrode dicht hinter der Membran angeordnet ist. Nach Anlegen einer Polarisationsspannung geeigneter Höhe wird der aus dem Messmedium durch die Membran in den Innenelektrolytraum diffundierte Sauerstoff an der Arbeitselektrode reduziert und es fließt ein dem Stoffumsatz entsprechender Strom. Dieser Strom ist proportional zum Sauerstoffpartialdruck im Messmedium und stellt die primäre Messgröße dar. Neben Sensoren mit zwei Elektroden sind auch solche mit drei Elektroden gebräuchlich, die potentiostatisch betrieben werden, wobei die zusätzliche Elektrode als Referenzelektrode zur Stabilisierung des Arbeitspunktes beiträgt.
Weitere verbreitete elektrochemische Gas-Sensoren, welche solche gasdurchlässigen Membranen besitzen, sind beispielsweise Sensoren vom Severinghaus-Typ zur Kohlendioxidbestimmung oder elektrochemische Sensoren zur Bestimmung von Wasserstoff mittels Oxidation an Platinelektroden.
Solche elektrochemischen Gas-Sensoren werden häufig in medizinischen und diagnostischen Analysesystemen zur Bestimmung von Gaspartialdrücken beziehungsweise von Gaskonzentrationen in Flüssigkeiten eingesetzt. Insbesondere werden solche elektrochemischen Gas-Sensoren in Blutgasanalysatoren eingesetzt, welche in der Diagnostik eine große Rolle spielen. Blutgasanalysatoren weisen oft mehrere hintereinander geschaltete Sensoren für verschiedene Parameter auf. Die Probenflüssigkeit fließt durch diese Sensoren, wobei die Messung häufig im so genannten Stop-Flow-Verfahren mit zum Zeitpunkt der Messung ruhender Probe erfolgt. Solche Systeme werden oft im Routinebetrieb in Krankenhäusern, Laboratorien und Praxen eingesetzt, so dass an die darin enthaltenen Sensoren hohe Ansprüche bezüglich Lebensdauer, Genauigkeit und Reproduzierbarkeit gestellt werden.
So werden beispielsweise zur Sauerstoffbestimmung in den OMNI-Analysesystemen von Roche Diagnostics amperometrische Sauerstoffsensoren eingesetzt. Bei diesen handelt es sich um miniaturisierte Gas-Sensoren vom Clark-Typ. Diese dort eingesetzten Gassensorelemente umfassen neben dem eigentlichen Sensor mit Innenelektrolytraum und den darin befindlichen Elektroden einen Probenkanal zum Transport und zur Bereitstellung der Probe. Zwischen Innenelektrolytraum und Probenkanal befindet sich eine gasdurchlässige und weitgehend ionen- und flüssigkeitsundurchlässige Kunststoff-Membran, welche Innenelektrolytraum und Probenkanal trennt. Die Membran liegt hier in einem mechanisch aufgespannten Zustand vor.
Der prinzipielle Aufbau eines solchen elektrochemischen Gas-Sensors wird in Fig. 1 dargestellt. Eine gasdurchlässige und weitgehend ionen- und flüssigkeitsundurchlässige Membran 1 trennt den Probenkanal 2 vom Innenelektrolytraum 3. Dieser ist mit einer Innenelektrolytlösung gefüllt, in welcher sich eine Messelektrode 4 und eine Ableitelektrode 5 befinden. Die Membran 1 wird durch die Messelektrode 4 in einem mechanisch aufgespannten Zustand gebracht.
An die Membran, welche Probenkanal und Innenelektrolytraum trennt, werden bestimmte Anforderungen bezüglich ihrer physikalischen und chemischen Eigenschaften gestellt. Relevante Eigenschaften der Membran sind insbesondere geringe Löslichkeitswerte und hohe Permeabilitätswerte für das zu bestimmende Gas, eine hohe mechanische Dehnbarkeit und Elastizität, eine weitgehende Impermeabilität für unter Normalbedingungen nicht gasförmige Substanzen, insbesondere niedermolekulare geladene und ungeladene Substanzen, und eine möglichst hohe chemische Inertheit sowie eine hohe Homogenität.
Häufig werden in elektrochemischen Gas-Sensoren dünne Membranen aus Kunststoffen eingesetzt, deren Eigenschaften einen möglichst optimalen Kompromiss an die oben genannten Anforderungen aufweisen. Häufig werden Membranen mit Schichtdicken im Mikrometerbereich aus hydrophoben Kunststoffen eingesetzt, insbesondere aus Polytetrafluorethylen, Polypropylen oder Polyethylen. Weitere Angaben zu bevorzugten Membranmaterialien sind in "Measurement of Oxygen by Membrane-covered Probes" (Ellis Horwood series in analytical chemistry), 1988, Ellis Horwood Limited, Seite 91 f. zu finden.
Bei der Bestimmung von gasförmigen Analyten in wässrigen Lösungen mittels elektrochemischer Gas-Sensoren, insbesondere in physiologischen Flüssigkeiten wie beispielsweise Vollblut, Serum oder Harn, können in wenigen seltenen Fällen Probleme bei der Probenmessung bzw. bei der Kalibrierung oder Qualitätskontrolle auftreten, wenn die Probe bzw. das Qualitätskontroll- oder Kalibriermittel den Probenkanal nur unvollständig füllt oder wenn sich in der Lösung im Bereich der Sensoren Gasblasen, beispielsweise Luftblasen, befinden. Insbesondere bei Blutgasanalysesystemen mit Sensorelementen für kleine Probenvolumina können Gasblasen zu Fehlmessungen führen, so dass im Hinblick auf das Vorhandensein oder Fehlen von Gasblasen eine wirksame Überprüfung durchgeführt werden muss. Hierzu sind aber oft aufwendige und komplexe Nachweisverfahren zur Detektion von Gasblasen im Sensorbereich nötig, wie sie beispielsweise in WO 01/33195 (Taagaard et al.) beschrieben werden. Gasblasen bleiben vorzugsweise an der Membranoberfläche hängen. Dieses Phänomen wird beobachtet, wenn beim Befiillvorgang des Probenkanals die wässrige Flüssigkeit der hydrophoben Oberfläche der Membran ein- oder beidseitig ausweicht. Hat die Flüssigkeitsfront die Möglichkeit, seitlich an der Membran vorbeizulaufen, noch bevor diese vollständig mit der Flüssigkeit bedeckt ist, bildet sich eine Gasblase im Bereich der Membran. Sowohl bereits existierende als auch neu gebildete Gasblasen bleiben bevorzugt an der Membran hängen und werden oft auch durch eine
Flüssigkeitsströmung nicht mitgerissen. Eine an der Membran haftende bzw. in unmittelbarer Umgebung der Membran befindliche Gasblase hat eine Fehlmessung zur Folge, die ohne zusätzliche Maßnahmen zur Detektion der Gasblase nicht erkannt wird.
Aus dem Stand der Technik sind in diesem Umfeld folgende Vorrichtungen und Verfahren zur Bereitstellung hydrophilerer Oberflächen bekannt:
In US 4,885,077 werden ionenpermeable hydrophile Komposit-Membranen beschrieben, welche aus einer pörosen Grundmembran bestehen, auf welche eine stark quervernetzte Schicht eines hydrophilen Polymers aufgebracht ist. Die Schicht des hydrophilen Polymers wird hierbei auch auf die Wandungen der Kapillar-Poren der Grundmembran aufgebracht, um eine hohe Ionenpermeabilität dieser Membranen zu gewährleisten. Hierzu beschreibt US 4,885,077 Beschichtungsverfahren, bei welchen eine poröse Grundmembran zunächst mit einer Lösung, welche Monomere eines hydrophilen Polymers enthält, in Kontakt gebracht wird, so dass sich diese Monomere sowohl auf der Oberfläche als auch in den Poren der Grundmembran befinden. In einem nachfolgenden Schritt, vorzugsweise durch eine nachgeschaltete Plasmapolymerisation, werden diese Monomere nun zu einem stark quervernetzten Polymerfilm polymerisiert, welcher sowohl die Membranoberfläche als auch die Porenwandungen auskleidet und somit eine hohe Ionenpermeabilität dieser Komposit-Membran bewirkt. Nachteilig an diesen Beschichtungen ist, dass die Beschichtungsverfahren komplex und zeitaufwändig sind und mehrere Verfahrensschritte unter unterschiedlichen Umgebungsbedingungen erfordern, um eine Polymerisation und Quervernetzung der Monomere zu einem Film eines hydrophilen Polymers zu erreichen.

US 4,534,355 beschreibt elektrochemische Gassensoren, bei welchen eine gaspermeable Membran aus hydrophilen Polyurethanen direkt auf die Sensorelektroden oder eine feste Elektrolytschicht aufgebracht ist. Die dort beschriebenen Membranschichten weisen relativ große Schichtdicken von bis zu 0,1 mm auf und müssen sowohl sensorspezifischen Anforderungen an Permeabilitäten bzw. Impermeabilitäten für bestimmte Substanzen oder hydrophilen Oberflächeneigenschaften als auch fertigungstechnischen Anforderungen an eine ausreichende Stabiltät und Dauerhaftigkeit der Membran genügen. Für einen Einsatz in erfindungsgemäßen Gas-Sensoren, welche eine gasdurchlässige und weitgehend ionen- und flüssigkeitsundurchlässige Membran zur Trennung von wässriger Außenlösung und Innenelektrolytlösung aufweisen, sind solche Polyurethanmembranen nicht geeignet, da sie insbesondere nicht den mechanischen Anforderungen an Membranen in solchen Sensortypen genügen. Insbesondere weisen solche reinen Polyurethanmembranen oft keine genügende Stabilität auf, um stabil und im gespannten Zustand über das Sensorgehäuse gespannt werden zu können.

### Aufgabe:

Aufgabe der vorliegenden Erfindung ist es daher, elektrochemische Gas-Sensoren bereitzustellen, bei welchen das Risiko von Fehlmessungen auf Grund von Gasblasen im Bereich der Sensormembran weiter gesenkt werden kann.

Aufgabe der vorliegenden Erfindung ist es insbesondere, elektrochemische Gas-Sensoren bereitzustellen, welche die Festsetzung oder Bildung von Gasblasen in wässrigen Außenlösungen, insbesondere in Probenflüssigkeiten und Kalibrier-, Referenz- oder Qualitätskontrolllösungen, im Bereich der Membran des Gas-Sensors möglichst vermeiden, insbesondere über einen langen Zeitraum und/oder viele Messzyklen.

Eine weitere Aufgabe der vorliegenden Erfindung ist es, durch die erfindungsgemäß eingesetzten Verfahren und Vorrichtungen zur Vermeidung von Gasblaseneinschlüssen die physikalischen und chemischen Kenngrößen der Membran und damit des Sensors nicht wesentlich zu verändern und somit weiterhin reproduzierbare und vergleichbare Bestimmungen zu ermöglichen.

Eine weitere Aufgabe der vorliegenden Erfindung ist es, durch die Verfahren und Vorrichtungen zur Vermeidung von Gasblaseneinschlüssen in Kombination mit Verfahren und Vorrichtungen zur Detektion von Gasblasen das Risiko unentdeckter Fehlmessungen weiter zu vermindern.

Eine weitere Aufgabe der vorliegenden Erfindung ist es, Verfahren zu einer möglichst einfachen und kostengünstigen Hydrophilisierung von Oberflächen, insbesondere der erfindungsgemäßen Sensoren und Membranen, bereitzustellen.

### Erfindungsgemäße Lösung:

Die Lösung der Aufgabe erfolgt erfindungsgemäß dadurch, dass zumindest auf der der wässrigen Außenlösung zugewandten Seite der Membran ein gasdurchlässiger Film eines hydrophilen Polymers vorliegt, welcher eine Oberflächenbenetzbarkeit für die wässrige Außenlösung aufweist, welche höher ist als die Oberflächenbenetzbarkeit der Membran für die wässrige Außenlösung ohne das Vorliegen eines solchen Films.

Zur Verdeutlichung der Erfindung werden im Folgenden einige Begriffe erläutert:

Als elektrochemische Gas-Sensoren oder gasselektive oder gassensitive Elektroden werden im Sinne der vorliegenden Anmeldung alle sensorischen Elemente angesehen, welche das Vorhandensein und/oder den Partialdruck beziehungsweise die Konzentration eines zu untersuchenden Gases mit elektrochemischen Nachweismethoden ermöglichen und eine gasdurchlässige und weitgehend flüssigkeits- und ionenundurchlässige Membran zur Abgrenzung der Innenelektrolytlösung von der wässrigen Außenlösung besitzen. Als elektrochemische Nachweismethoden können insbesondere amperometrische oder potentiometrische Methoden eingesetzt werden. Elektrochemische Gas-Sensoren im Sinne der vorliegenden Anmeldung können neben den eigentlichen sensorischen Bestandteilen, wie beispielsweise Membran, Innenelektrolytlösung oder Elektroden, weitere Komponenten enthalten. So können sie neben den eigentlichen sensorischen Bestandteilen Komponenten enthalten, welche dem Transport von Flüssigkeiten oder Gasen dienen. Solche Komponenten sind beispielsweise der Probenkanal, welcher an die Membran angrenzt und eventuell weitere zu- oder abführende Komponenten zur Verbindung mehrerer sensorischer Elemente oder Module in einem komplexeren Analysesystem. Der Einsatz der erfindungsgemäßen Gas-Sensoren ist prinzipiell für alle unter Normalbedingungen gasförmigen Stoffe und Dämpfe möglich. Insbesondere können solche erfindungsgemäßen Gas-Sensoren zur Bestimmung medizinisch und diagnostisch relevanter Gase eingesetzt werden. Solche Gase sind beispielsweise Sauerstoff oder Kohlendioxid.

Als wässrige Lösungen, insbesondere wässrige Außenlösungen und Probenlösungen, werden im Sinne der vorliegenden Anmeldung alle unter Normalbedingungen flüssigen Substanzen und Substanzgemische angesehen, welche einen Wassergehalt von mehr als 50 Gewichtsprozent besitzen. Dies können Lösungen oder auch homogene oder heterogene Mischungen wie beispielsweise Dispersionen, Emulsionen oder Suspensionen sein. Insbesondere können dies Probenflüssigkeiten, insbesondere Körperflüssigkeiten oder davon abgeleitete Flüssigkeiten wie Blut, Plasma, Serum oder Urin sein. Die wässrigen Außenlösungen können aber auch Salzlösungen, Pufferlösungen, Kalibrationslösungen, Referenzlösungen, Qualitätskontrolllösungen, Spül- oder Reinigungslösungen, Reagenzlösungen oder Lösungen mit standardisierten Analytkonzentrationen, so genannte Standards, sein.

Als Membran oder Sensormembran wird im Sinne der vorliegenden Anmeldung eine dünne Schicht eines gasdurchlässigen und weitgehend flüssigkeits- und ionenundurchlässigen Materials verstanden, welche die Innenelektrolytlösung beziehungsweise den Innenelektrolytraum von der wässrigen Außenlösung beziehungsweise dem Probenkanal trennt. Als Membranmaterialien können prinzipiell alle Stoffe und Stoffmischungen eingesetzt werden, welche die oben genannten Anforderungen erfüllen. Insbesondere können als Membranen dünne Schichten eines hydrophoben Kunststoffes eingesetzt werden, beispielsweise Polytetrafluorethylen, Polypropylen oder Polyethylen. Membranen im Sinne der vorliegenden Anmeldung trennen zwei Kompartimente, in welchen zumindest zum Zeitpunkt der Messung Flüssigkeiten vorliegen. Hiermit grenzen sie sich insbesondere von Schichten ab, welche in Sensoren vom Dickschicht-Typ zur Detektion eingesetzt werden und dort in manchen Fällen ebenfalls als Membranen bezeichnet werden. Derartige Sensoren werden beispielsweise als elektrochemische Glukosesensoren in US 5,322,063 (Allen et al.) oder allgemeine elektrochemische Biosensoren in US 6,509,148 (Cha et al.) beschrieben. Diese dort eingesetzten Schichten werden jedoch auf ein festes Trägersubstrat aufgebracht, so dass sie nicht von zwei Kompartimenten, in welchen zumindest zum Zeitpunkt der Messung Flüssigkeiten vorliegen, umgeben sind.

Als Film im Sinne der vorliegenden Anmeldung wird eine zusammenhängende Beschichtung verstanden, welche durch Auftragen einer einheitlichen Schicht einer Substanz auf einen Untergrund entsteht. Die Auftragung kann insbesondere dadurch erfolgen, dass die aufzutragende Substanz in gelöster Form auf die zu beschichtende Oberfläche aufgebracht wird und der Film durch Entzug des Lösungsmittels oder Lösemittelgemisches entsteht.

Der Begriff Oberflächenbenetzbarkeit oder Benetzbarkeit wird im Sinne der vorliegenden Anmeldung als Maß für die hydrophilen oder hydrophoben Eigenschaften einer Oberfläche eingesetzt. Durch wässrige Flüssigkeiten gut benetzbare Oberflächen weisen im Allgemeinen eine hohe Hydrophilie auf. Als Maßzahl für die Benetzbarkeit wird der Benetzungswinkel oder Kontaktwinkel angegeben. Hierunter versteht man den Winkel, den eine Tangente an die Tropfenkontur im Drei-Phasen-Punkt zur Oberfläche des Festkörpers bildet und welcher ein Maß für die Benetzbarkeit einer Oberfläche oder Grenzfläche durch eine andere Phase darstellt. Je kleiner der Benetzungswinkel ist, umso höher ist die Benetzbarkeit und umso hydrophiler ist die Oberfläche. Eine Benetzbarkeit einer Oberfläche durch Wasser ist insbesondere dann gegeben, wenn der Benetzungswinkel geringer als 90° ist.

Als hydrophile Polymere im Sinne der vorliegenden Anmeldung werden polymere Stoffe verstanden, welche aus Monomerbausteinen des gleichen Typs oder unterschiedlicher Typen aufgebaut sind und hydrophile Eigenschaften aufweisen. Die Polymerketten solcher Polymere sind hydrophil oder weisen zumindest hydrophile Kettensequenzen auf. Solche hydrophilen Polymere besitzen chemische Gruppen mit hoher Affinität zu Wasser wie beispielsweise Hydroxy- oder Ether-Gruppen. Beispiele für hydrophile Polymere sind bestimmte Polyether wie bestimmte Polyethylenglycole oder bestimmte Polypropylenglycole, bestimmte Polysaccharide wie bestimmte Dextrane oder bestimmte Polyalkohole wie bestimmte Polyvinylalkohole. Insbesondere können auch bestimmte Polyether-Polyurethan-Copolymere als hydrophile Polymere eingesetzt werden. Hydrophile Polymere können anhand ihres Quellverhaltens charakterisiert werden, beispielsweise durch Angabe der Wasseraufnahme oder der Expansions-Rate. Als hydrophile Polymere im Sinne der Anmeldung gelten insbesondere bereits fertig auspolymerisierte Polymermoleküle, insbesondere längerkettige Polymermoleküle, welche nicht kovalt untereinander quervernetzt sind und somit in geeigneten Lösungsmitteln noch in ausreichender Menge gelöst werden können. Hierdurch grenzt sich die vorliegende Erfindung von Beschichtungsmaterialien und -verfahren ab, bei welchen zunächst keine fertig auspolymerisierten Polymermoleküle, sondern deren Vorstufen auf eine Membran aufgebracht werden und dort erst durch verschiedene Verfahren, beispielsweise Plasmapolymerisation, zu einem hydrophilen Netzwerk auspolymerisiert werden, welches aus kovalent quervernetzten Polymerketten besteht. Nicht kovalent quervernetzt ist hierbei so zu verstehen, dass die einzelnen Polymerketten im Wesentlichen nicht untereinander kovalent verknüpft sind. Es ist jedoch prinzipiell möglich, das nach Auftrag der erfindungsgemäßen nicht kovalent quervernetzten Polymerketten auf die zu beschichtende Oberfläche und der Bildung des Polymersfilms oder durch nachgeschaltete Vorgänge, z.B. während der Lagerung, nachträglich unspezifische kovalente Bindungen in geringem Maße zwischen einzelnen Polymerketten und/oder einzelnen Polymerketten und der Membranoberfläche entstehen können. Solche eventuell unspezifisch auftretenden Bindungen, wie sie beispielsweise in Folge einer Plasmabehandlung entstehen können, zwischen den einzelnen Polymerketten oder Polymerketten und Membranoberfläche sind jedoch nicht wesentlich für die Herstellung und/oder die erfindungsgemäßen Eigenschaften des Polymerfilms. Sie sind somit klar von den chemischen Bindungen zwischen einzelnen Molekülen und/oder Membranoberfläche im Falle erst auf der Membranoberfläche aus Vorstufen hergestellter Polymerfilme zu unterscheiden, bei welchen diese entstehenden chemischen Bindungen essentiell und entscheidend für die Herstellung und die Eigenschaften des gebildeten Polymerfilms sind.

Als organische Lösungsmittel und Lösemittelgemische gelten im Sinne der vorliegenden Anmeldung Lösungsmittel und Lösemittelgemische mit einem Wassergehalt von weniger als 50 Gewichtsprozent.

Die erfindungsgemäße Lösung der Aufgabe erfolgt dadurch, dass die Benetzbarkeit der Membran für wässrige Lösungen durch das Vorliegen eines dünnen Film eines hydrophilen Polymers zumindest auf der der wässrigen Außenlösung zugewandten Seite der Membran verbessert wird. Vorzugsweise werden die für die Funktion des elektrochemischen Gas-Sensors wesentlichen physikalischen Eigenschaften der Membran wie Löslichkeits- und Diffusionswerte für Gase, Dehnbarkeit, Elastizität oder Impermeabilität gegenüber unter Normalbedingungen nicht gasförmigen Substanzen dabei nicht nachteilig beeinflusst.

Erfindungsgemäß wird die Benetzbarkeit der Membran dadurch erhöht, dass zumindest auf der der wässrigen Außenlösung zugewandten Seite der Membran ein dünner gasdurchlässiger Film eines hydrophilen Polymers vorliegt. Hierdurch wird die Benetzbarkeit für wässrige Lösungen in diesem Bereich im Vergleich zur unbehandelten Membran deutlich verbessert, so dass das Risiko von Gasblaseneinschlüssen in diesem Bereich weiter gesenkt werden kann. Der Auftrag des Films des hydrophilen Polymers erfolgt erfindungsgemäß zumindest auf der der wässrigen Außenlösung zugewandten Seite der Membran. Vorzugsweise erfolgt die Herstellung des Films dadurch, dass der Film des hydrophilen Polymers direkt ohne weitere Zwischenschichten auf den Oberflächen der Membran hergestellt wird. Hierbei kann die ganze der wässrigen Außenlösung zugewandte Seite der Membran mit einem Film des hydrophilen Polymers versehen werden. In weiteren Ausführungsformen wird nicht die ganze der wässrigen Außenlösung zugewandte Seite der Membran mit einem Film des hydrophilen Polymers versehen, sondern nur der Bereich der Membran, welcher mit der wässrigen Außenlösung in Kontakt treten kann. In weiteren Ausführungsformen kann auch die gesamte Membran, das heißt sowohl die der wässrigen Außenlösung zugewandte Seite als auch die dem Innenelektrolyten zugewandete Seite, mit einem Film des hydrophilen Polymers versehen werden, beispielsweise durch kurzzeitiges Eintauchen der gesamten Membran in eine Lösung des hydrophilen Polymers, anschließendes Herausziehen der Membran und anschließenden Entzug des Lösungsmittels.

Die weiteren Anforderungen, die physikalischen Eigenschaften der Membran nicht signifikant zu verändern, werden erfindungsgemäß dadurch gelöst, dass das hydrophile Polymer in einer bevorzugten Ausführungsform in Form eines sehr dünnen, gaspermeablen Films vorliegt. Je nach Art und Beschaffenheit des hydrophilen Polymers liegt die Filmdicke zwischen 0,01 und 10 µm, bevorzugt zwischen 0,01 und 1,2 µm, und besonders bevorzugt zwischen 0,01 und 0,2 µm.
Fig. 3 zeigt schematisch den prinzipiellen Aufbau eines solchen erfindungsgemäßen elektrochemischen Gas-Sensors, welcher eine mit einem Film eines hydrophilen Polymers versehene Membran besitzt. Die Elemente 1 bis 5 sind in Zusammenhang mit Fig. 1 bereits beschrieben. Erfindungsgemäß weist die Membran 1 auf der dem Probenkanal 2 zugewandten Seite einen Film eines hydrophilen Polymers 6 auf. Dieser bedeckt zumindest den Teil der Membran, welcher mit sich im Probenkanal befindlichen Flüssigkeiten in Kontakt treten kann (ausgefüllter Bereich). In weiteren Ausführungsformen, insbesondere aber auch aus fertigungstechnischen Gründen, ist es möglich, dass auch zusätzliche Teile der Membran mit einem Film des hydrophilen Polymers 6 versehen sind (schraffierter Bereich).
Durch die Beschichtung einer Grundmembran mit einem Film eines zum Material der Grundmembran unterschiedlichen hydrophilen Polymers können die chemischen und mechanischen Eigenschaften dieses Systems zumindest teilweise unabhängig voneinander und auch gezielt auf die spezifischen Anforderungen des jeweiligen Sensortyps abgestimmt werden, beispielsweise durch spezifische Wahl der Materialien oder Dicken für Grundmembran und hydrophiles Polymer. Somit können optimiertere Membransystemeigenschaften erzielt werden als beispielsweise bei Membranen nach US 4,534,355, bei welchen die Membran nur aus einer einzigen Schicht eines hydrophilen Polyurethans besteht. Durch die Verwendung der erfindungsgemäßer Membransysteme kann weiterhin die Menge des benötigten hydrophilen Polymers im Vergleich zu den Membranen nach US 4,534,355 deutlich reduziert werden, da hier bereits wesentlich dünnere hydrophile Polymerschichten im Bereich einiger hundert Nanometer für eine optimierte Hydrophilisierung der Oberfläche ausreichen.

In einer bevorzugten Ausführungsform besteht der auf die Membran aufgebrachte Film aus einem hydrophilen Polymer, welches in bestimmten organischen Lösungsmitteln und Lösemittelgemischen löslich und in wässrigen Lösungen, insbesondere den wässrigen Außenlösungen und Probenflüssigkeiten, weitgehend unlöslich ist. Durch die Verwendung derartiger hydrophiler Polymere ist es insbesondere möglich, eine haltbare und dauerhafte Beschichtung der Membran mit einem Film eines solchen hydrophilen Polymers rationell und effizient ohne zusätzliche chemische Reaktionsschritte vorzunehmen. Die Beschichtung kann beispielsweise dadurch erfolgen, dass das hydrophile Polymer zunächst in einem organischen Lösungsmittel oder Lösemittelgemisch in Lösung gebracht wird, diese Polymerlösung anschließend auf die zu beschichtenden Teile der Membran aufgebracht wird, ein eventueller Überschuss an Polymerlösung entfernt wird, so dass eine bestimmte Menge an Polymerlösung auf der Membran zurückbleibt und schließlich das organische Lösungsmittel oder Lösemittelgemisch der an der Membran befindlichen Polymerlösung entzogen wird, so dass ein Film des hydrophilen Polymers auf der Membran zurückbleibt. Weiterhin ist es durch die Einstellung der Menge und/oder Konzentration der auf der Membran zurückbleibenden Polymerlösung möglich, gezielt die Dicke des auf die Membran aufgebrachten Films des hydrophilen Polymers zu definieren und einzustellen. Besonders bevorzugt können daher hydrophile Polymere eingesetzt werden, welche aus nicht kovalent quervernetzten Polymerketten bestehen. Diese können besonders vorteilhaft mir den oben beschriebenen Verfahren hergestellt werden Ein großer Vorteil der vorliegenden Erfindung ist es, dass das hydrophile Polymer nicht erst auf der zu beschichtenden Membran hergestellt werden muss, sondern die hydrophilen Polymerketten bereits in einer im wesentlichen gebrauchsfertigen Lösung auf die Membran aufgebracht werden können. Hiermit unterscheidet sich die vorliegende Erfindung insbesondere von hydrophilen Beschichtungen, welche durch Polymerisation von Monomeren, insbesondere durch Plasmapolymerisation, auf einer Grundmembran hergestellt werden, da durch das erfindungsgemäße Verfahren, welches mit bereits auspolymerisierten hydrophilen Polymeren, welche im wesentlichen aus nicht kovalent quervernetzten Polymerketten bestehen, arbeitet, auf aufwändige Polymerisationsschritte verzichtet werden kann. Durch den Einsatz derartiger hydrophiler Polymere ist es möglich, ohne zusätzliche chemische Reaktionsschritte direkt und einfach eine hydrophile Beschichtung herzustellen. Hierbei müssen die Polymerketten nicht notwendigerweise untereinander quervernetzt vorliegen, um eine dauerhafte hydrophile Beschichtung zu erreichen. Durch die Verwendung längerkettiger Polymere können sich diese auch ohne kovalente Quervernetzungen untereinander zu einem haltbaren Film eines hydrophilen Polymers anordnen.
Die weitgehende Unlöslichkeit des hydrophilen Polymers in wässrigen Lösungen, insbesondere in wässrigen Außenlösungen und Probeflüssigkeiten, ermöglicht es, die Stabilität des Films des hydrophilen Polymers weiterhin zu verbessern. Insbesondere bei der Verwendung solcher mit einem Film eines hydrophilen Polymers versehener Membranen in elektrochemischen Gas-Sensoren in diagnostischen Analysesystemen, beispielsweise Blutgasanalysatoren, kann hiermit die Haltbarkeit des Films erhöht werden. Durch den häufigen Kontakt mit wässrigen Lösungen, beispielsweise durch das vielmalige Wiederholen des Befüll- und Entleervorgangs des Probenkanals, wie es in solchen Blutgasanalysesystemen üblich ist, kann es zur Reduktion der Schichtdicke des Films mit der Zeit durch ein kontinuierliches Auflösen des Films des hydrophilen Polymers kommen. Durch den Einsatz von in wässrigen Lösungen weitgehend unlöslichen hydrophilen Polymeren kann eine solche Auflösung des Polymerfilms weitgehend vermieden werden, so dass derartige Filme eine erhöhte Lebensdauer aufweisen und somit für den Einsatz in solchen Analysesystemen bevorzugt geeignet sind.

In einer bevorzugten Ausführungsform besteht der auf der Membran vorliegende Film aus einem Polyether-Polyurethan-Copolymer. Solche Polyether-Polyurethan-Copolymere sind beispielsweise in den US-Patenten US 5,728,762 (Reich et al.) und US 5,932,200 (Reich et al.) beschrieben. Solche hydrophilen Polymere zeigen überraschenderweise eine besondere Eignung für eine erfindungsgemäße Beschichtung einer Membran mit einem Film eines hydrophilen Polymers. Solche bevorzugten Polyether-Polyurethan-Copolymere sind Blockcopolymere mit hydrophilen Bereichen und hydrophoben Bereichen. Durch diese amphiphilen Eigenschaften lösen sich die Polymere einerseits gut in bestimmten organischen Lösungsmitteln und Lösemittelgemischen, organisieren sich anderseits nach Entzug des organischen Lösungsmittels oder Lösemittelgemisches zu in wässrigen Lösungen weitgehend unlöslichen Hydrogelen mit hydrophilen Oberflächeneigenschaften und sind somit für eine erfindungsgemäße Beschichtung besonders geeignet. Solche besonders geeigneten Polyether-Polyurethan-Copolymere können beispielsweise von CardioTech International, Inc., Woburn, MA, U.S.A. bezogen werden.

In einer bevorzugten Form besteht die Membran aus einem gasdurchlässigen Kunststoff, insbesondere Polytetrafluorethylen, Polypropylen oder Polyethylen. Diese Materialen eignen sich besonders für den Einsatz in elektrochemischen Gas-Sensoren, da sie einerseits eine hohe Durchlässigkeit für unter Normalbedingungen gasförmige Stoffe und andererseits eine weitgehende Undurchlässigkeit für unter Normalbedingungen nicht gasförmige Stoffe besitzen und somit die prinzipiellen Anforderungen an eine semipermeable Membran erfüllen. Insbesondere eignen sich dünne Membranen aus Polytetrafluorethylen mit einer Schichtdicke im Mikrometerbereich als Membranen für elektrochemische Gas-Sensoren. Solche Membranen zeichnen sich durch Dehnbarkeit und Elastizität aus, so dass sie insbesondere für den Einsatz als mechanisch aufgespannte Membranen in elektrochemischen Gas-Sensoren geeignet sind, wie es in Fig. 1 schematisch verdeutlicht wird.

In einer besonders bevorzugten Ausführungsform wird die Membran vor der Herstellung des Films des hydrophilen Polymers einer Behandlung ihrer Oberfläche unterzogen. Hierbei wird zumindest der Teil der Oberfläche der Membran behandelt, auf welchem anschließend ein Film des hydrophilen Polymers hergestellt wird. Überraschenderweise hat sich hierbei gezeigt, dass durch eine solche Vorbehandlung die Haftung des Films auf der Membran und die Widerstandsfähigkeit des aufgebrachten Films gegenüber physikalischen oder chemischen Belastungen weiter verbessert werden kann. Unter physikalischen Belastungen kann insbesondere der wiederholte Kontakt über eine längere Zeit mit wässrigen Probeflüssigkeiten, insbesondere mit Körperflüssigkeiten wie beispielsweise Blut, Plasma, Serum oder Harn verstanden werden. Bei einer solchen physikalischen Belastung über einen längeren Zeitraum kann sich die Schichtstärke des Films des hydrophilen Polymers im Laufe der Zeit reduzieren oder der Film kann sich ganz oder in Teilen von der Membran ablösen. Chemische Belastungen können unter anderem ein Kontakt mit aggressiven chemischen Reagenzien wie beispielsweise aggressiven Reinigungslösungen sein.

Eine Behandlung der Membran vor dem Aufbringen des Films des hydrophilen Polymers kann hierbei mit physikalisch-chemischen Methoden, vorzugsweise mittels einer Plasmabehandlung, erfolgen. Prinzipiell können jedoch auch andere physikalisch-chemische Methoden zur Vorbehandlung der Membran, beispielsweise eine Ionenstrahlbehandlung oder eine Behandlung mit einer oxidierenden Substanz, beispielsweise einer Natrium-Naphthalin-Lösung, eingesetzt werden. Solche Verfahren zur Oberflächenbehandlung sind bekannt und beispielsweise in "Surface Modification of Poly(tetrafluoroethylene) Film by Chemical Etching, Plasma and Ion Beam Treatments", Kim S., Journal of Applied Polymer Science, 2000, Vol. 77, S. 1913-1920 oder in WO 94/06485 (Chatelier et al.) beschrieben. Als chemischen Methoden zur Oberflächenbehandlung kommen vorzugsweise jedoch nicht solche Methoden in Frage, durch welche zusätzliche Zwischenschichten, beispielsweise Haftvermittlerschichten, aufgetragen werden. Als physikalisch-chemische Methoden zu Oberflächenbehandlung gelten in der vorliegenden Anmeldung vielmehr solche Verfahren als bevorzugt, welche zu einer Erhöhung der Reaktivität der Oberflächen führen, ohne in größeren Umfang die chemische Zusammensetzung der Membran zu verändern. Durch eine solche Behandlung der Oberfläche der Membran vor dem Aufbringen des Polymerfilms wird diese in einer Weise modifiziert, welche die Haftung und die Widerstandsfähigkeit des Polymerfilms gegenüber physikalischen oder chemischen Belastungen erhöht. Es hat sich überraschenderweise herausgestellt, dass insbesondere durch eine Behandlung der Membran mit einem Plasma vor der Aufbringung der Polymerlösung sowohl ein ausreichender Haftverbund zwischen der Membran und dem Polymerfilm als auch eine ausreichende Widerstandsfähigkeit des Films erreicht werden kann. Durch solch eine physikalische Plasmabehandlung kann auf den Einsatz toxischer Chemikalien zur Oberflächenbehandlung verzichtet werden. Eine Vorbehandlung der Membran mit einen Gasplasma führt zu einer homogenen Modifikation der Oberfläche, welche sich nur in geringe Tiefen des Membranmaterials fortsetzt. Bei solchen Plasma-Methoden zur Membranvorbehandlung wird durch eine elektrische Entladung oder durch Einstrahlung elektromagnetischer Felder in eine Gasatmosphäre unter reduziertem Druck ein Gasplasma mit ionisierten Partikeln erzeugt, welches dazu eingesetzt werden kann, auf der Membran reaktive Bereiche zu erzeugen und somit deren Reaktivität zumindest kurzzeitig zu erhöhen, so dass die Haftung des Polymerfilms an der Membran und dessen Widerstandsfähigkeit gegenüber physikalischen oder chemischen Belastungen erhöht werden kann.

Zur weiteren Verbesserung der Haftung des Films auf der Membran und der Widerstandsfähigkeit des aufgebrachten Films gegenüber physikalischen Belastungen kann optional nach der Herstellung des Films des hydrophilen Polymers eine Behandlung der Membran und des darauf aufgebrachten Films des hydrophilen Polymers durchgeführt werden. Diese Behandlung kann insbesondere als eine weitere oder auch erstmalige Plasmabehandlung durchgeführt werden.

In einer weiteren bevorzugten Ausführungsform werden neben der Membran auch weitere dem Flüssigkeitstransport dienende Komponenten des elektrochemischen Gas-Sensors, insbesondere der Probenkanal und/oder weitere flüssigkeitszuführende oder flüssigkeitsabführende Komponenten, zumindest auf ihrer der Flüssigkeit zugewandten Seite mit einem Film des hydrophilen Polymers versehen. Hierzu können alle zuvor in Zusammenhang mit der Herstellung des Films des hydrophilen Polymers auf der Membran beschriebenen Ausführungsformen und Alternativen bezüglich Materialien und Verfahren analog auf die Herstellung des Films des hydrophilen Polymers auf weitere dem Flüssigkeitstransport dienende Komponenten des elektrochemischen Gas-Sensors übertragen werden. Das Vorliegen eines Films des hydrophilen Polymers auch auf anderen Komponenten des flüssigkeitsführenden Systems hat den Vorteil, dass die inneren Oberflächen der flüssigkeitsführenden Komponenten mit einer weitgehend einheitlichen Oberflächenbeschaffenheit ausgestattet werden. Insbesondere weisen sie eine weitgehend gleichmäßig hydrophile innere Oberfläche innerhalb des flüssigkeitsführenden Systems auf, wodurch Sprünge in den Benetzungseigenschaften und somit Ansatzpunkte zur Festsetzung von Gasblasen vermieden werden können. Hierdurch kann das Risiko der Bildung und/oder Festsetzung von Gasblasen und somit das Risiko von Fehlmessungen weiter verringert werden.

Die Erfindung betrifft weiterhin Verfahren zur Herstellung eines gasdurchlässigen Films eines hydrophilen Polymers auf Membranen von elektrochemischen Gas-Sensoren. Diese Verfahren sind dadurch gekennzeichnet, dass das hydrophile Polymer zunächst in einem organischen Lösungsmittel oder Lösemittelgemisch gelöst wird, diese Polymerlösung anschließend zumindest auf eine Seite der Membran aufgebracht wird und schließlich das organische Lösungsmittel oder Lösemittelgemisch entzogen wird, so dass das hydrophile Polymer in Form eines dünnen Films auf zumindest einer Membranseite vorliegt. Die für ein solches erfindungsgemäßes Verfahren geeigneten hydrophilen Polymere sind insbesondere in bestimmten organischen Lösungsmitteln oder Lösemittelgemischen löslich und in wässrigen Lösungen, insbesondere in Probenflüssigkeiten wie beispielsweise Blut, weitgehend unlöslich sein. Erfindungsgemäß erfolgt die Herstellung des Films dadurch, dass der Film des hydrophilen Polymers direkt ohne weitere Zwischenschichten auf der Membran hergestellt wird, indem eine Lösung des hydrophilen Polymers zumindest auf die der wässrigen Außenlösung zugewandten Seite der Membran aufgetragen wird. Nach dem Verdunsten des Lösungsmittels oder Lösemittelgemisches haftet das hydrophile Polymer als ein dünner Film direkt auf der Membran. Hierdurch können weitere Nachteile des Standes der Technik überwunden werden. So beschreibt etwa WO 02/070590 (Faure et al.) Techniken, ein hydrophiles Polymer, welches in Form eines bereits existierenden Films vorliegt, auf ein vorbehandeltes Substrat aufzutragen. Bedingt durch die schlechte Handhabbarkeit solcher vorgefertigter sehr dünner Filme hydrophiler Polymere ist eine in WO 02/070590 offenbarte Aufbringung eines dünnen vorgefertigten und mechanisch kaum belastbaren Films auf eine dünne Polytetrafluorethylenmembran fertigungstechnisch sehr schwierig und aufwendig und daher ökonomisch nicht sinnvoll. Mit den in der vorliegenden Anmeldung beschriebenen Vorrichtungen und Verfahren können diese Nachteile vermieden werden.

In einer bevorzugten Ausführungsform dieses Verfahrens erfolgt vor dem Auftragen der Polymerlösung eine Behandlung der Oberfläche der Membran mit physikalisch-chemischen Methoden, vorzugsweise mit einer Plasmabehandlung. Hierzu können alle zuvor in Zusammenhang mit einer Vorbehandlung der Membran beschriebenen

Ausführungsformen und Alternativen bezüglich Materialien und Verfahren analog auf ein solches Verfahren übertragen werden.

### Beispiele:

Die Erfindung wird anhand von Beispielen und Zeichnungen näher erläutert.

### Abbildungen:

Fig. 1 zeigt den prinzipiellen Aufbau eines elektrochemischen Gas-Sensors.

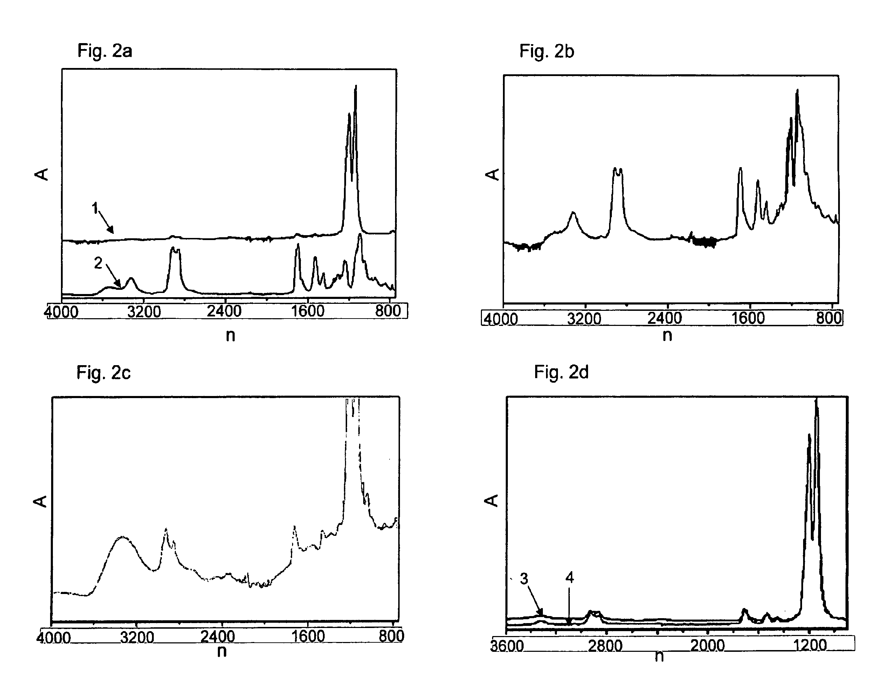

Fig. 2 zeigt Attenuated Total Reflection-Infrarot-Spektren (ATR-IR-Spektren) unbeschichteter und mit einem Film eines hydrophilen Polymers beschichteter Polytetrafluorethylen-Membranen. Fig. 2a zeigt ATR-IR-Spektren einer unbeschichteten Polytetrafluorethylen-Membran sowie einer reinen Schicht des hydrophilen Polymers X1, Fig. 2b zeigt ein ATR-IR-Spektrum einer frisch mit X1 beschichteten Polytetrafluorethylen-Membran und Fig. 2c zeigt ein ATR-IR-Spektrum einer mit X1 beschichteten Polytetrafluorethylen-Membran nach sechsmonatigem Belastungstest. Fig. 2d zeigt ATR-IR-Spektren einer mit X1 beschichteten Polytetrafluorethylen-Membran vor und nach einer eintägigen Behandlung mit einer Hypochloritlösung.
Fig. 3 zeigt den prinzipiellen Aufbau eines elektrochemischen Gas-Sensors nach Fig. 1, welcher eine erfindungsgemäß mit einem Film eines hydrophilen Polymers versehene Membran aufweist.

### Beispiel 1: Herstellung eines Films eines hydrophilen Polymers auf einer plasmavorbehandelten Membran

X1 bezeichnet im weiteren ein hydrophiles Polymer vom Polyether-Polyurethan-Copolymer-Typ, welches beispielsweise von Cardiotech International, 78 E Olympia Avenue, Woburn MA 01801-2057, USA als "Hydrophilic Polyether Polyurethane" bezogen werden kann und eine Wasseraufnahmerate von 50 % und eine Expansionsrate durch Quellung von 60 % aufweist.
Zur Herstellung einer Lösung des hydrophilen Polymers X1 wird eine definierte Menge des Hydrogelgranulats X1 in einer Ethanol-Wassermischung unter Rühren gelöst.
Zur Vorbehandlung der Membran wird eine auf einem Träger aufgespannte dünne Polytetrafluorethylenmembran (Teflonmembran) in eine Plasmaanlage von Typ V 15-G der Firma Plasmafinish eingebracht und analog den Herstellerangaben für wenige Minuten bei 2,45 GHz mit einem Edelgasplasma behandelt. An die Plasmabehandlung anschließend wird die aufgespannte und plasmabehandelte Teflonmembran mit der plasmabehandelten Oberfläche für einige Sekunden in die Lösung des hydrophilen Polymers X1 getaucht, wieder aus der Lösung entnommen und an der Luft getrocknet. Diese mit einem Film des hydrophilen Polymers X1 versehene Teflonmembran kann nun zum Einbau in einen elektrochemischen Gas-Sensor eingesetzt werden.

### Beispiel 2: Nachweis eines auf eine Membran aufgebrachten Films eines hydrophilen Polymers

Auf eine Membran aus Polytetrafluorethylen von 25 Mikrometer Dicke wurde nach dem in Beispiel 1 beschriebenen Verfahren ein dünner Film des hydrophilen Polymers X1 aufgetragen. Diese so beschichtete Membran wurde mittels Attenuated Total Reflection-Infrarot-Spektroskopie (ATR-IR-Spektroskopie) einer Analyse ihrer Oberflächenbeschaffenheit unterzogen. Mit dieser Aufnahmetechnik für Oberflächen-IR-Spektren durch abgeschwächte Totalreflexion an Grenzflächen können Rückschlüsse auf die chemische Beschaffenheit der Oberfläche einer Probe mit einer Analyseneindringtiefe von 0,5 - 5 Mikrometern gewonnen werden. Die Untersuchung wurde mit einem Equinox 55-IR-Spektometer der Firma Bruker Optics, Ettlingen, Deutschland durchgeführt. Die ATR-IR-Spektren in Fig. 2 zeigen die Ergebnisse solcher Untersuchungen, wobei auf der x-Achse die Wellenzahl n in 1/cm und auf der y-Achse die Absorption A in relativen Einheiten aufgetragen ist.
Figur 2a zeigt als Referenz ATR-IR-Spektren einer unbeschichteten
Polyfluortetraethylen-Membran (Kurve 1) und einer Schicht des reinen Beschichtungsmaterials (Kurve 2). Kurve 1 weist die typischen Absorptionsmaxima der C-F-Bindungen des Polytetrafluorethylens im Wellenzahlbereich von ca. 1100-1300 auf, während Kurve 2 ein deutlich komplexeres Absorptionsspektrum mit charakteristischen Absorptionsmaxima im Wellenzahlbereich von ca. 2800-3050 (vor allem durch C-H-Bindungen) und mehreren Absorptionsmaxima im Wellenzahlbereich von ca. 1000-1700 (vor allem durch C-O-Bindungen) aufweist.

Figur 2b zeigt ein ATR-IR-Spektrum einer 25 Mikrometer dicken Membran aus Polytetrafluorethylen, auf welche nach dem in Beispiel 1 beschriebenen Verfahren ein dünner Film des hydrophilen Polymers X1 aufgetragen wurde. Deutlich ist erkennbar, dass dieses ATR-IR-Spektrum sowohl die charakteristischen Absorptionsmaxima des Beschichtungsmaterials in den Wellenzahlbereichen von ca. 2800-3050 und von ca. 1000-1700 als auch die charakteristischen Absorptionsmaxima der Membran im Wellenzahlbereich von ca. 1100-1300 aufweist. Eine solche Überlagerung der Signale zeigt in Anbetracht der Analysentiefen von 0,5 - 5 Mikrometern, dass auf die Membran erfindungsgemäß ein Film des hydrophilen Polymers mit einer Dicke im Submikrometer beziehungsweise im unteren Mikrometerbereich aufgebracht werden kann.

### Beispiel 3: Bestimmung der Oberflächenbenetzbarkeit unbeschichteter und mit hydrophilem Polymer beschichteter Polytetrafluorethylen-Membranen

Auf eine Membran aus Polytetrafluorethylen von 25 Mikrometer Dicke wurde nach dem in Beispiel 1 beschriebenen Verfahren ein dünner Film des hydrophilen Polymers X1 aufgetragen.
Mit dem Kontaktwinkel-Meßsystem G2 der Firma Krüss GmbH, Hamburg, Deutschland wurde die Oberflächenbenetzbarkeit durch Analyse der Kontaktwinkel von Wasser auf den beschichteten und unbeschichteten Oberflächen untersucht. Die Messung erfolgte mit jeweils 5 Bestimmungen auf einer trockenen Oberfläche. Tabelle 1 zeigt die hierbei bestimmten Kontaktwinkel. Die Werte geben den Mittelwert der jeweils 5 Bestimmungen und die dazu gehörige Standardabweichung an.

**Tabelle 1:**

| Probe | Beschreibung | Kontaktwinkel [°] |
|---|---|---|
| 1 | Polytetrafluorethylen-Membran mit X1-Beschichtung | 60,8 ± 7,7 |
| 2 | Polytetrafluorethylen-Membran ohne Beschichtung | 118 ± 7 |

Die Messungen zeigen deutlich, dass durch das Vorliegen deines dünnen Films des hydrophilen Polymers X1 auf der Membran der Kontaktwinkel deutlich reduziert und somit die Oberflächenbenetzbarkeit für wässrige Flüssigkeiten deutlich erhöht werden kann.

### Beispiel 4: Bestimmung der Haltbarkeit und Dauerhaftigkeit des Polymer-Films auf einer Polytetrafluorethylenmembran

Auf eine Membran aus Polytetrafluorethylen von 25 Mikrometer Dicke wurde nach dem in Beispiel 1 beschriebenen Verfahren ein dünner Film des hydrophilen Polymers X1 aufgetragen.
Diese mit einem Film eines hydrophilen Polymers X1 beschichtete Polytetrafluorethylenmembran wurde als Bestandteil eines elektrochemischen Sauerstoffsensors eingesetzt, welcher über einen Zeitraum von 6 Monaten und eine Anzahl von mindestens 1.000 Messungen in Betrieb war. Hierbei wurden überwiegend Blut und wässrige Kontrolllösungen vermessen sowie weiterhin Reinigungs- und Kalibrierschritte mit unterschiedlichen wässrigen Lösungen durchgeführt. Dies dient als typischer Belastungstest für die Dauerhaftigkeit der Haftung des Polymerfilms auf der Membran sowie dessen Widerstandsfähigkeit gegenüber physikalischen oder chemischen Belastungen durch den vielmaligen Wechsel wässriger Flüssigkeiten. Nach diesem Zeitraum wurde die Membran analog zur Durchführung in Beispiel 2 einer ATR-IR-Spektroskopie zur Analyse ihrer Oberflächenbeschaffenheit unterzogen.
Figur 2c zeigt ein ATR-IR-Spektrum einer 25 Mikrometer dünnen Membran aus Polytetrafluorethylen, auf welche nach dem in Beispiel 1 beschriebenen Verfahren ein dünner Film des hydrophilen Polymers X1 aufgetragen wurde und welche unter den oben beschriebenen Bedingungen 6 Monate einem Belastungstest unterzogen wurde. Deutlich ist erkennbar, dass dieses ATR-IR-Spektrum sowohl die charakteristischen Absorptionsmaxima des Beschichtungsmaterials in den Wellenzahlbereichen von ca. 2800-3050 und von ca. 1000-1700 als auch die charakteristischen Absorptionsmaxima der Membran im Wellenzahlbereich von ca. 1100-1300 aufweist. Eine solche Überlagerung der Signale zeigt, dass auf der Membran auch nach sechsmonatigem Belastungstest immer noch ein Film des hydrophilen Polymers nachweisbar ist. Das in Fig. 2c dargestellte Spektrum der Oberfläche einer beschichteten Membran nach sechsmonatigem Belastungstest zeigt im Gegensatz zu dem in Fig. 2b dargestellten Spektrum der Oberfläche einer frisch beschichteten Membran in verschiedenen Absorptionsbereichen Unterschiede auf. Diese Unterschiede können beispielsweise durch die Anlagerung von Substanzen, beispielsweise Proteinen, aus den gemessenen Probenflüssigkeiten zustande kommen, welche sich im Laufe des sechsmonatigen Belastungstests auf der Oberfläche abgesetzt haben.

### Beispiel 5: Nachweis der Beständigkeit des Polymer-Films gegenüber aggressiven Reagenzien

Auf eine Membran aus Polytetrafluorethylen von 25 Mikrometer Dicke wurde nach dem in Beispiel 1 beschriebenen Verfahren ein dünner Film des hydrophilen Polymers X1 aufgetragen.
Die so beschichtete Membran wurde 24 Stunden bei 37°C in einer Reinigungslösung mit 1,5 % Natriumhypochlorit gegeben, um die Widerstandsfähigkeit gegenüber aggressiven chemischen Reagenzien zu überprüfen. Es wurden ATR-IR-Spektren der Oberfläche der beschichteten Membran vor und nach der Hypochloritbehandlung aufgenommen und verglichen.
Fig. 2d zeigt ATR-IR-Spektren der Oberfläche der beschichteten Membran vor und nach einer Hypochloritbehandlung. Kurve 3 zeigt das ATR-IR-Spektrum der Oberfläche der beschichteten Membran vor der Hypochloritbehandlung, Kurve 4 zeigt das ATR-IR-Spektrum der Oberfläche der beschichteten Membran nach einer eintägigen Hypochloritbehandlung. Die Spektren zeigen vor und nach der Behandlung mit solch aggressiven Reagenzien nahezu keine Unterschiede. Insbesondere sind im ATR-IR-Spektrum nach Hypochloritbehandlung (Kurve 4) die charakteristischen Absorptionsmaxima des Beschichtungsmaterials in den Wellenzahlbereichen von ca. 2800-3050 und von ca. 1000-1700 noch nahezu unverändert vorhanden. Dies zeigt, dass auch nach einer langen Behandlung mit aggressiven Reagenzien wie Hypochloritlösung der Film des hydrophilen Polymers stabil auf der Membran haftet.

### Beispiel 6: Nachweis der Wirksamkeit des hydrophilen Polymerfilms zur Reduzierung der Gasblasenfestsetzung im Bereich der Sensormembran

Auf eine Membran aus Polytetrafluorethylen von 25 Mikrometer Dicke wurde nach dem in Beispiel 1 beschriebenen Verfahren ein dünner Film des hydrophilen Polymers X1 aufgetragen.
Als Kontrolle dienten unbeschichtete Polytetrafluorethylen-Membranen. Die mit hydrophilem Polymer beschichteten beziehungsweise die unbeschichteten Membranen wurden als Bestandteile von elektrochemischen Sauerstoffsensoren eingesetzt. Mit diesen elektrochemischen Sauerstoffsensoren wurden in OMNI-Analysatoren der Firma Roche Diagnostics Proben tonometrierten Blutes oder tonometrierter wässriger Kontrolllösungen vermessen. Pro Sensor wurden insgesamt ca. 270 Proben (ca. 60 % Blutproben und ca. 40 % wässrige Kontrolllösungen) über einen Zeitraum von 3 Wochen gemessen. Die tonometrierten Proben wiesen einen Sauerstoffgehalt auf, welcher unterhalb der Luftsauerstoffkonzentration lag, so dass Füllfehler daher anhand eines abweichenden Messwertes erkannt werden konnten.
Tabelle 2 zeigt einen Vergleich der Häufigkeit von Fehlmessungen, welche auf die Festsetzung von Gasblasen zurückzuführen sind.

**Tabelle 2:**

| | Anzahl der durchgeführten Sauerstoff-bestimmungen | Anzahl der Fehlmessungen auf Grund von Gasblasen | Verhältnis der Anzahl der Fehlmessungen zur Gesamtzahl der Sauerstoffbestimmungen |
|---|---|---|---|
| Polytetrafluorethylen-Membran ohne Beschichtung | 1350 | 3 | 0,22 % |
| Polytetrafluorethylen-Membran mit X1-Beschichtung | 8100 | 1 | 0,012 % |

Fehlmessungen auf Grund von Gasblasen traten ausschließlich bei Messungen von wässrigen Kontrolllösungen auf, jedoch in keinem Fall bei Messungen von Blutproben und konnten in jedem Fall eindeutig als Fehlmessungen erkannt werden.
Es zeigt sich deutlich, dass durch die erfindungsgemäße Beschichtung der Membran eines elektrochemischen Gas-Sensors mit einem hydrophilen Polymer das Risiko der Festsetzung von Gasblasen im Bereich der Sensormembran und somit das Risiko von Fehlmessungen im Vergleich zum Stand der Technik weiter deutlich, im vorliegenden Falle um einen Faktor 18, gesenkt werden kann.

## Patentansprüche

1. Elektrochemischer Gas-Sensor mit einer gasdurchlässigen und weitgehend ionen- und flüssigkeitsundurchlässigen Membran zur Trennung von wässriger Außenlösung und Innenelektrolytlösung,
**dadurch gekennzeichnet, dass**
zumindest auf der der wässrigen Außenlösung zugewandten Seite der Membran direkt ein gasdurchlässiger Film eines nicht kovalent quervernetzten hydrophilen Polymers vorliegt, welcher eine Oberflächenbenetzbarkeit für die wässrige Außenlösung aufweist, welche höher ist als die Oberflächenbenetzbarkeit der Membran für die wässrige Außenlösung.

2. Elektrochemischer Gas-Sensor gemäß Anspruch 1,
**dadurch gekennzeichnet, dass**
das hydrophile Polymer in organischen Lösungsmitteln und Lösemittelgemischen löslich und in wässrigen Lösungen, insbesondere den wässrigen Außenlösungen und Probenflüssigkeiten, weitgehend unlöslich sind.

3. Elektrochemischer Gas-Sensor gemäß einem der vorherigen Ansprüche,
**dadurch gekennzeichnet, dass**
das hydrophile Polymer ein Blockcopolymer mit hydrophilen Bereichen und hydrophoben Bereichen ist.

4. Elektrochemischer Gas-Sensor gemäß einem der vorherigen Ansprüche,
**dadurch gekennzeichnet, dass**
das hydrophile Polymer ein Polyether-Polyurethan-Copolymer ist.

5. Elektrochemischer Gas-Sensor gemäß einem der vorherigen Ansprüche,
**dadurch gekennzeichnet, dass**
die Dicke des Films des hydrophilen Polymers zwischen 0,01 und 10 µm, bevorzugt zwischen 0,01 und 1,2 µm, besonders bevorzugt zwischen 0,01 und 0,2 µm beträgt.

6. Elektrochemischer Gas-Sensor gemäß einem der vorherigen Ansprüche,
**dadurch gekennzeichnet, dass**
die Membran aus einem gasdurchlässigen Kunststoff, insbesondere Polytetrafluorethylen, Polypropylen oder Polyethylen, besteht.

7. Elektrochemischer Gas-Sensor gemäß einem der vorherigen Ansprüche,
**dadurch gekennzeichnet, dass**
neben der Membran auch weitere dem Flüssigkeitstransport dienende Komponenten des elektrochemischen Gas-Sensors, insbesondere der Probenkanal und/oder weitere flüssigkeitszuführende oder flüssigkeitsabführende Komponenten, zumindest auf der der Flüssigkeit zugewandten Seite mit einem Film des hydrophilen Polymers beschichtet sind.

8. Verfahren zur Beschichtung zumindest einer der wässrigen Außenlösung zugewandten Seite einer Membran eines elektrochemischen Gas-Sensor gemäß einem der Ansprüche 1 bis 7 mit einem gasdurchlässigen Film eines hydrophilen Polymers,
**dadurch gekennzeichnet, dass**
a) das zur Beschichtung vorgesehene hydrophile Polymer in einem organischen Lösungsmittel oder Lösemittelgemisch gelöst wird,
b) diese Polymerlösung zumindest auf eine Seite der Membran aufgebracht wird und
c) das organische Lösungsmittel oder Lösemittelgemisch entzogen wird, so dass das hydrophile Polymer in Form eines dünnen Films auf zumindest einer Membranseite vorliegt.

9. Verfahren gemäß Anspruch 8,
**dadurch gekennzeichnet, dass**
vor dem Aufbringen der Lösung des hydrophilen Polymers auf die Membran eine Behandlung der Oberfläche der Membran mit physikalisch-chemischen Verfahren, insbesondere mit einer Plasmabehandlung, erfolgt.

## Claims

1. Electrochemical gas sensor comprising a gas-permeable and substantially ion-impermeable and liquid-impermeable membrane for separating an
aqueous outer solution and inner electrolyte solution,
**characterized in that**
a gas-permeable film of a non-covalently cross-linked hydrophilic polymer is present directly at least on the side of the membrane facing the aqueous outer solution, said film having a surface wettability for the aqueous outer solution that is higher than the surface wettability of the membrane for the aqueous outer solution.

2. Electrochemical gas sensor according to claim 1,
**characterized in that**
the hydrophilic polymer is soluble in organic solvents and solvent mixtures
and is substantially insoluble in aqueous solutions, in particular in the aqueous outer solutions and sample liquids.

3. Electrochemical gas sensor according to one of the previous claims,
**characterized in that**
the hydrophilic polymer is a block copolymer with hydrophilic regions and hydrophobic regions.

4. Electrochemical gas sensor according to one of the previous claims,
**characterized in that** the hydrophilic polymer is a polyether-polyurethane copolymer.

5. Electrochemical gas sensor according to one of the previous claims,
**characterized in that**
the thickness of the film of the hydrophilic polymer is between 0.01 and 10 µm, preferably between 0.01 and 1.2 µm and particularly preferably between 0.01 and 0.2 µm.

6. Electrochemical gas sensor according to one of the previous claims,
**characterized in that**
the membrane consists of a gas-permeable plastic, in particular polytetrafluoroethylene, polypropylene or polyethylene.

7. Electrochemical gas sensor according to one of the previous claims,
**characterized in that**
in addition to the membrane, other components of the electrochemical gas sensor that are used for liquid transport and in particular the sample channel and/or further liquid delivery or liquid discharge components are coated with a film of the hydrophilic polymer at least on the side facing the liquid.

8. Method for coating at least one side of a membrane of an electrochemical gas sensor according to one of the claims 1 to 7 which faces the aqueous outer solution with a gas-permeable film of a hydrophilic polymer,
**characterized in that**
a) the hydrophilic polymer provided for the coating is dissolved in an organic solvent or solvent mixture,
b) this polymer solution is applied at least to one side of the membrane and
c) the organic solvent or solvent mixture is removed so that the hydrophilic polymer is present in the form of a thin film on at least one side of the membrane.

9. Method according to claim 8,
**characterized in that**
the surface of the membrane is treated by physical-chemical methods and in particular by a plasma treatment before applying the solution of the hydrophilic polymer onto the membrane.

## Revendications

1. Capteur de gaz électrochimique avec une membrane perméable aux gaz et largement imperméable aux ions et aux liquides pour séparer une solution aqueuse extérieure et une solution électrolytique intérieure, **caractérisé en ce qu'**est situé, directement et au moins sur la face de la membrane tournée vers la solution aqueuse extérieure, un film perméable aux gaz en un polymère hydrophile non covalent à réticulation transversale qui présente une mouillabilité de surface pour la solution aqueuse extérieure qui est supérieure à la mouillabilité de surface de la membrane pour la solution aqueuse extérieure.

2. Capteur de gaz électrochimique selon la revendication 1, **caractérisé en ce que** le polymère hydrophile est soluble dans des solvants et mélanges de solvants organiques et est largement insoluble dans des solutions aqueuses, en particulier dans les solutions aqueuses extérieures et les liquides d'échantillons.

3. Capteur de gaz électrochimique selon l'une des revendications précédentes, **caractérisé en ce que** le polymère hydrophile est un copolymère bloc avec des zones hydrophiles et des zones hydrophobes.

4. Capteur de gaz électrochimique selon l'une des revendications précédentes, **caractérisé en ce que** le polymère hydrophile est un copolymère de polyéther et de polyuréthane.

5. Capteur de gaz électrochimique selon l'une des revendications précédentes, **caractérisé en ce que** l'épaisseur du film composé du polymère hydrophile est comprise entre 0,01 et 10 µm, de préférence entre 0,01 et 1,2 µm, et de manière particulièrement préférentielle entre 0,01 et 0,2 µm.

6. Capteur de gaz électrochimique selon l'une des revendications précédentes, **caractérisé en ce que** la membrane se compose d'une matière plastique perméable aux gaz, en particulier de polytétrafluoréthylène, de polypropylène ou de polyéthylène.

7. Capteur de gaz électrochimique selon l'une des revendications précédentes, **caractérisé en ce que**, outre la membrane, d'autres composants du capteur de gaz électrochimique servant au transport de liquides, en particulier le canal d'échantillon et/ou d'autres composants d'amenée de liquide ou d'évacuation de liquide, sont revêtus, au moins sur la face tournée vers le liquide, d'un film composé du polymère hydrophile.

8. Procédé de revêtement d'au moins une face, tournée vers la solution aqueuse extérieure, d'une membrane d'un capteur de gaz électrochimique selon l'une des revendications 1 à 7, avec un film perméable aux gaz en un polymère hydrophile, **caractérisé en ce que**
a) le polymère hydrophile prévu pour le revêtement se dissout dans un solvant organique ou mélange de solvants organiques,
b) cette solution de polymère est appliquée au moins sur une face de la membrane et
c) le solvant organique ou le mélange de solvants organiques sont retirés en sorte que le polymère hydrophile se présente sous la forme d'un film mince sur au moins une face de la membrane.

9. Procédé selon la revendication 8, **caractérisé en ce que**, avant l'application de la solution composée du polymère hydrophile sur la membrane, un traitement de la surface de la membrane avec des procédés physico-chimiques, et plus particulièrement avec un traitement plasma, est effectué.
